# EUROPEAN PATENT APPLICATION

(11) **EP 4 556 517 A1**
(43) Date of publication of application: **21.05.2025**
(21) Application number: 24212023.6
(22) Date of filing: 11.11.2024
(51) Int. Cl.: C08K 3/26, C08L 67/02, C08L 67/04, C08L 101/16

(54) **BIODEGRADABLE RESIN COMPOSITION AND BIODEGRADABLE MOLDED ARTICLE INCLUDING THE SAME**

(30) Priority: 14.11.2023 KR 20230157113; 21.10.2024 KR 20240144430
(71) Applicant: SK leaveo Co., Ltd., Gyeonggi-do 16338 (KR)
(72) Inventor: CHOI, Yujin, 03142 Seoul (KR); LEE, Deuk-Young, 03142 Seoul (KR); KIM, Sangmin, 03142 Seoul (KR)
(74) Representative: Isarpatent

(57) **Abstract**

The present invention provides a biodegradable resin composition and a biodegradable molded article including the same, and more particularly a biodegradable resin composition including the first biodegradable resin having a glass transition temperature (Tg) of -15 °C or lower, and an inorganic filler, wherein the mold shrinkage ratio of the biodegradable resin specimen measured according to Measurement Method 1 below is 1.0 % or less:
[Measurement Method l](see the detail description)

## Description

### [Technical Field]

The present invention relates to a biodegradable resin composition and a biodegradable molded article including the same.

### [Background Art]

Recently, as concerns about environmental problems have increased, solutions to the disposal problems of various household goods, especially disposable products, are required. Specifically, petroleum-based polymer materials are inexpensive and have excellent processability, so they are widely used to manufacture various products such as films, fibers, packaging materials, bottles, and containers. However, products made from the petroleum-based polymer materials emit harmful substances when incinerated at the end of lifespan thereof. In addition, depending on the types of products, it takes hundreds of years to completely decompose naturally.

To overcome these limitations of petroleum-based polymer materials, research is being actively conducted on biodegradable resins that decompose in a relatively short period. Polylactic acid (PLA), polybutylene adipate terephthalate (PBAT), and polybutylene succinate (PBS) are being introduced as biodegradable resins.

However, PLA lacks flexibility, and PBAT has poor mechanical properties, so the uses thereof are limited. To improve these problems, in US Patent No. 9096758, PBAT as a biodegradable resin composition was mixed with a small amount of inorganic filler. However, there are still limitations in replacing conventional petroleum-based polymer materials due to low mechanical properties and low moisture resistance.

### [Related Art Document]

### [Patent Document]

(Patent Document 1) US Patent No. 9096758

### [Disclosure]

### [Technical Problem]

Therefore, the present invention has been made in view of the above problems, and it is one object of the present invention to provide a biodegradable resin composition having excellent dimensional stability and mechanical properties and a biodegradable molded article including the same.

### [Technical Solution]

In accordance with an aspect of the present invention, the above and other objects can be accomplished by the provision of a biodegradable resin composition, including:
a first biodegradable resin having a glass transition temperature (Tg) of -15 °C or lower; and
an inorganic filler,
wherein a mold shrinkage ratio of the biodegradable resin specimen measured according to Measurement Method 1 below is 1.0 % or less:
   [Measurement Method 1]
   1) The biodegradable resin composition is placed between a pair of molds having a size of 60 mm in a transverse direction × 60 mm in a longitudinal direction, and then a biodegradable resin specimen having an average thickness of 2 mm is manufactured at 180 °C under a pressure of 20 Mpa.
   2) The biodegradable resin specimen is removed from the molds, and after 24 hours, a shrinkage ratio in a transverse direction of the biodegradable resin specimen and a shrinkage ratio in a longitudinal direction thereof are calculated.
   3) A mold shrinkage ratio of the biodegradable resin specimen is calculated according to Equation 1 below:
   Mold shrinkage ratio (%) of biodegradable resin specimen = (Shrinkage ratio in transverse direction + Shrinkage ratio in longitudinal direction)/2
where the shrinkage ratio in the transverse direction is calculated by Equation 2 below, the shrinkage ratio in the longitudinal direction is calculated by Equation 3 below: Shrinkage ratio (%) in transverse direction = (Transverse length (mm) of biodegradable resin specimen after 24 hours/60 mm) × 100 Shrinkage ratio (%) in longitudinal direction = (Longitudinal length (mm) of biodegradable resin specimen after 24 hours/60 mm) × 100.

In an embodiment of the present invention, the biodegradable resin specimen may have a mold shrinkage ratio of 0.5 % or less.

In an embodiment of the present invention, a content of the inorganic filler may be 10 wt% to 90 wt% based on a total weight of the biodegradable resin composition.

In an embodiment of the present invention, the biodegradable resin composition may include the first biodegradable resin and the inorganic filler in a weight ratio of 90: 10 to 30:70.

In an embodiment of the present invention, the biodegradable resin composition may include a second biodegradable resin different from the first biodegradable resin, and the second biodegradable resin has a glass transition temperature (Tg) of 50 °C or higher.

In an embodiment of the present invention, a flexural strength of the second biodegradable resin according to ASTM D790 may be 50 MPa or more.

In an embodiment of the present invention, a flexural modulus of the second biodegradable resin according to ASTM D790 may be 2,500 MPa or more.

In an embodiment of the present invention, the biodegradable resin composition may include the first biodegradable resin and the second biodegradable resin in a weight ratio of 90:10 to 10:90.

In an embodiment of the present invention, a first thermal expansion coefficient of a biodegradable resin specimen sample measured according to Measurement Method 2 below may be 75 µm/(m·°C) to 290 µm/(m·°C):

### [Measurement Method 2]

1) The biodegradable resin specimen is cut into a size of 20 mm in a transverse direction × 4 mm in a longitudinal direction × 0.7 mm in a thickness to manufacture a biodegradable resin specimen sample.
2) A first thermal expansion coefficient of the biodegradable resin specimen sample is measured in a range of 10 °C to 40 °C while heating from 0 °C to 100 °C at a rate of 5 °C/min using a thermomechanical analyzer.

In an embodiment of the present invention, a second thermal expansion coefficient in a range of 80 °C to 100 °C of the biodegradable resin specimen sample measured according to Measurement Method 2 described above may be 100 pm/(m. °C) to 1,000 µm/(m·°C).

In an embodiment of the present invention, a specific gravity of a biodegradable resin pellet measured according to Measurement Method 3 below may be 1.30 to 2.00:

### [Measurement Method 3]

1) The biodegradable resin composition is extruded at 175 °C, and then cooled at 5 °C, thereby manufacturing a biodegradable resin pellet.
2) A specific gravity of the biodegradable resin pellet is measured at 23 °C according to ASTM D792.

In accordance with another aspect of the present invention, there is provided a biodegradable molded article, including:
a first biodegradable resin having a glass transition temperature (Tg) of -15 °C or lower; and
an inorganic filler,
wherein a mold shrinkage ratio of a biodegradable resin specimen measured according to Measurement Method 1 below is 1.0 % or less:
   [Measurement Method 1]
   1) The biodegradable resin composition is placed between a pair of molds having a size of 60 mm in a transverse direction × 60 mm in a transverse direction, and then a biodegradable resin specimen having an average thickness of 2 mm is manufactured at 180 °C under a pressure of 20 Mpa.
   2) The biodegradable resin specimen is removed from the molds, and after 24 hours, a shrinkage ratio in the transverse direction of the biodegradable resin specimen and a shrinkage ratio in the longitudinal direction thereof are calculated.
   3) The mold shrinkage ratio of the biodegradable resin specimen is calculated according to Equation 1 below: Mold shrinkage ratio (%) of biodegradable resin specimen = (Shrinkage ratio in transverse direction + Shrinkage ratio in longitudinal direction)/2
In Equation 1, the shrinkage ratio in the transverse direction is calculated by Equation 2 below, the shrinkage ratio in the longitudinal direction is calculated by Equation 3 below: Shrinkage ratio (%) in transverse direction = (Transverse length (mm) of biodegradable resin specimen after 24 hours/60 mm) × 100 Shrinkage ratio (%) in longitudinal direction = (Longitudinal length (mm) of biodegradable resin specimen after 24 hours/60 mm) × 100.

In an embodiment of the present invention, the biodegradable molded article may be a nonwoven fabric, a vacuum-formed sheet, a blown-molded article, or an injection-molded article.

### [Advantageous effects]

A biodegradable resin composition according to the present invention includes a biodegradable resin whose glass transition temperature is adjusted in a specific range or less, so that biodegradability, tensile strength and elongation can be improved, and a biodegradable molded article containing the biodegradable resin composition can be easily decomposed when disposed.

In addition, the biodegradable resin composition according to the present invention includes a biodegradable resin whose glass transition temperature is adjusted in a specific range or less and, at the same time, the mold shrinkage ratio of the biodegradable resin composition can be controlled in a specific range or less, so that a volume change during injection molding can be minimized, and flexural strength, flexural modulus, breaking elongation and impact strength can be improved, thereby improving mechanical properties.

Further, the biodegradable resin composition according to the present invention includes a high content of inorganic filler, so that the dimensional stability at room temperature and high temperature can be improved, and can be more appropriately applied to container products that require a preservation function, durability, etc. due to the high specific gravity thereof.

### [Best Mode]

Structural or functional descriptions of embodiments disclosed in the present specification or application are merely illustrated for the purpose of explaining embodiments according to the technical idea of the present invention, embodiments according to the technical idea of the present invention may be implemented in various forms other than the embodiments disclosed in the present specification or application, and it is not to be construed that the technical idea of the present invention is limited to the embodiments described in the present specification or application.

In the present specification or application, when a certain component is "included", this indicates that only the component is included or the component may further include another component unless there is no different disclosure. In addition, it should be understood that all numerical ranges representing physical property values, dimensions, etc. of components described in the present specification or application are modified by the term 'about' in all cases unless otherwise specified.

In addition, in the present specification or the present application, 'ppm' is based on the weight.

In the present specification or the present application, "A and/or B" means "A, B, or, A and B."

Hereinafter, a biodegradable resin composition according to the present invention and a biodegradable molded article including the same are described.

A biodegradable resin composition according to the present invention includes a first biodegradable resin having a glass transition temperature (Tg) of -15 °C or lower, and an inorganic filler, and the mold shrinkage ratio of a biodegradable resin specimen measured according to Measurement Method 1 below is 1.0 % or less:

### [Measurement Method 1]

1) The biodegradable resin composition is placed between a pair of molds having a size of 60 mm in a transverse direction × 60 mm in a longitudinal direction, and then a biodegradable resin specimen having an average thickness of 2 mm is manufactured at 180 °C under a pressure of 20 Mpa.
2) The biodegradable resin specimen is removed from the molds, and after 24 hours, a shrinkage ratio in the transverse direction of the biodegradable resin specimen and a shrinkage ratio in the longitudinal direction thereof are calculated.
3) The mold shrinkage ratio of the biodegradable resin specimen is calculated according to Equation 1 below: Mold shrinkage ratio (%) of biodegradable resin specimen = (Shrinkage ratio in transverse direction + Shrinkage ratio in longitudinal direction)/2

In Equation 1, the shrinkage ratio in the transverse direction is calculated by Equation 2 below, the shrinkage ratio in the longitudinal direction is calculated by Equation 3 below: Shrinkage ratio (%) in transverse direction = (Transverse length (mm) of biodegradable resin specimen after 24 hours/60 mm) × 100 Shrinkage ratio (%) in longitudinal direction = (Longitudinal length (mm) of biodegradable resin specimen after 24 hours/60 mm) × 100

The biodegradable resin composition includes a first biodegradable resin having a glass transition temperature (Tg) of -15 °C or lower. The glass transition temperature of the first biodegradable resin may be -15 °C or lower, -15 °C to -50 °C, -20 °C to -50 °C, -20 °C to -48 °C, -25 °C to -45 °C, or -26 °C to -42 °C.

To perform a first thermal history removal process, the glass transition temperature (Tg) was elevated from 40 °C to 180 °C at a rate of 10 °C/min using differential scanning calorimetry (DSC), and then isothermally maintained for 5 minutes, and to measure a first endothermic temperature, a cooling process was performed by cooling from 180 °C to -50 °C at a rate of 10 °C/min and isothermally maintaining for 5 minutes, and then the first endothermic temperature was measured while heating from -50 °C to 180 °C at a heating rate of 10 °C/min.

The first biodegradable resin may include a diol, aromatic dicarboxylic acid and aliphatic dicarboxylic acid.

The first biodegradable resin may include a first repeating unit and a second repeating unit. The first repeating unit may include a diol component and an aromatic dicarboxylic acid component, and the second repeating unit may include a diol component and an aliphatic dicarboxylic acid component.

The number of the first repeating units may be 100 to 620, 150 to 600, 150 to 550, 150 to 500, 170 to 480, or 171 to 476.

The number of the second repeating units may be 120 to 800, 150 to 800, 170 to 700, 200 to 600, 230 to 600, 230 to 550, 230 to 530, 238 to 524, 250 to 550, 280 to 530, or 300 to 500.

When the range is satisfied, the glass transition temperature (Tg) of the first biodegradable resin may be adjusted to -15 °C or lower, so that the crystallinity of the biodegradable resin composition is lowered, thereby improving tensile strength and elongation.

The diol component may include 1,4-butanediol or a derivative thereof. Based on a total mol number of the diol component, the diol component may include 1,4-butanediol or a derivative thereof in an amount of 95 mol% or more, 97 mol% or more, 98 mol% or more, 99 mol% or more, or 100 mol%. The diol component may improve biodegradability, flexibility, and strength by including 1,4-butanediol or a derivative thereof. When the diol component consists only of 1,4-butanediol, the improvement in biodegradability and strength may be maximized.

The diol component may further include a second diol that is different from the first diol, which is 1,4-butanediol or a derivative thereof. The second diol may include one or more selected from the group consisting of propanediol, hexanediol, cyclohexanedimethanol, and ethylene glycol. Specifically, the second diol may include one or more selected from the group consisting of 1,3-propanediol, 1,2-propanediol, 1,2-hexanediol, 1,3-hexanediol, 1,4-hexanediol, 1,6-hexanediol, 2,3-hexanediol, 2,4-hexanediol, 2,5-hexanediol, 2,6-hexanediol, 3,4-hexanediol, 1,2-cyclohexanedimethanol, 1,3-cyclohexanedimethanol, 1,4-cyclohexanedimethanol, and ethylene glycol. Based on a total mol number of the diol component, the diol component may include the second diol in an amount of 5 mol% or less, 3 mol% or less, 2 mol% or less, or 1 mol% or less.

The aromatic dicarboxylic acid component may include one or more selected from the group consisting of terephthalic acid, dimethyl terephthalic acid, and derivatives thereof. Specifically, the aromatic dicarboxylic acid component may be terephthalic acid or dimethyl terephthalic acid. Based on a total mol number of the dicarboxylic acid component, the dicarboxylic acid component may include the aromatic dicarboxylic acid component in an amount of 15 mol% or more, 30 mol% or more, 45 mol% or more, 50 mol% or more, or 75 mol% or more, as a specific example, 30 mol% to 90 mol%, 35 mol% to 80 mol%, 40 mol% to 75 mol%, 45 mol% to 65 mol%, or 45 mol% to 55 mol%.

The aliphatic dicarboxylic acid component may include one or more selected from the group consisting of adipic acid, succinic acid, and derivatives thereof. Specifically, the aliphatic dicarboxylic acid component may be adipic acid or succinic acid. Based on a total mol number of the dicarboxylic acid component, the dicarboxylic acid component may include the aliphatic dicarboxylic acid component in an amount of 15 mol% or more, 30 mol% or more, 45 mol% or more, 50 mol% or more, or 75 mol% or more, as a specific example, 30 mol% to 90 mol%, 35 mol% to 80 mol%, 40 mol% to 75 mol%, 45 mol% to 65 mol%, or 45 mol% to 55 mol%.

A molar ratio of the aromatic dicarboxylic acid component to the aliphatic dicarboxylic acid component may be 0.5 to 1.5:1, 0.6 to 1.5:1, 0.6 to 1.4:1, 0.7 to 1.4:1, 0.7 to 1.3:1, or 0.8 to 1.2:1.

A molar ratio of the diol component to the dicarboxylic acid component may be 0.5 to 2:1, 0.5 to 1.9:1, 0.5 to 1.8:1, 0.5 to 1.7:1, 0.6 to 1.7:1, 0.6 to 1.6:1, 0.7 to 1.5:1, or 0.9 to 1.2:1. When the range is satisfied, the biodegradability, strength, and processability of the biodegradable resin composition may be improved without discoloration such as yellowing.

The biodegradable resin may include polybutylene adipate terephthalate (PBAT), in which the first repetitive unit may include a diol component and an aromatic dicarboxylic acid component and the second repetitive unit may include a diol component and an aliphatic dicarboxylic acid component.

Specifically, the polybutylene adipate terephthalate may include a unit represented by Formula 1 below:

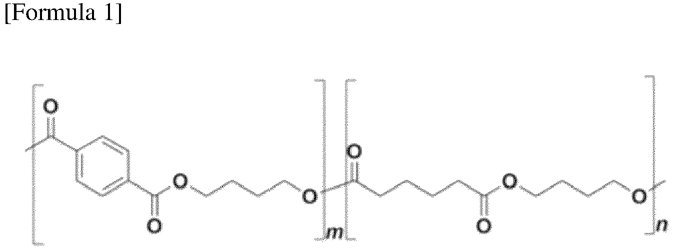

In Formula 1, m may be 1 to 20, and n may be 1 to 20.

The biodegradable resin composition may include a second biodegradable resin different from the first biodegradable resin, and the second biodegradable resin may have a glass transition temperature (Tg) of 50 °C or higher. The glass transition temperature of the second biodegradable resin may be 50 °C or higher, 50 °C to 80 °C, 50 °C to 75 °C, 50 °C to 70 °C, 55 °C to 70 °C, or 55 °C to 65 °C. When the range is satisfied, the chain fluidity of the polymer may be decreased in the process of cooling the biodegradable resin composition, so that volume changes may be minimized during a process of injection-molding the biodegradable resin composition.

The flexural strength of the second biodegradable resin according to ASTM D790 may be 50 MPa or more, 60 MPa or more, 70 MPa or more, 80 MPa or more, 100 MPa or more, or 100 MPa or more to 150 MPa or less.

The flexural modulus of the second biodegradable resin according to ASTM D790 may be 2,500 MPa or more, 2,800 MPa or more, 3,000 MPa or more, 3,200 MPa or more, 3,300 MPa or more, or 3,300 MPa or more to 4,000 MPa or less.

When the range is satisfied, the mechanical properties, such as flexural strength and flexural modulus, of the first biodegradable resin may be supplemented.

The biodegradable resin composition may include the first biodegradable resin and the second biodegradable resin in a weight ratio of 90: 10 to 10:90, 80:20 to 10:90, 70:30 to 10:90, 60:40 to 10:90, or 60:40 to 20:90. When the range is satisfied, breaking elongation and impact strength are excellent, so that brittleness may be improved and processability may increase. In addition, the flexural strength and the flexural modulus may be improved.

The flexural strength of the biodegradable resin composition according to ASTM D790 may be 9 MPa or more, 10 MPa or more, 20 MPa or more, 25 MPa or more, 30 MPa or more, or 9 MPa or more to 50 MPa or less.

The flexural modulus of the biodegradable resin composition according to ASTM D790 may be 150 MPa or more, 200 MPa or more, 250 MPa or more, 300 MPa or more, 800 MPa or more, or 310 MPa or more to 1,000 MPa or less.

The weight average molecular weight of the biodegradable resin composition may depend upon a weight ratio of the first biodegradable resin to the second biodegradable resin. In addition, the flexural strength and/or flexural modulus of the biodegradable resin composition may be changed depending upon the weight average molecular weight and/or the degree of bonding between the first biodegradable resin and the second biodegradable resin. In addition, the mold shrinkage ratio of a biodegradable resin specimen may be adjusted according to changes in the flexural strength and/or flexural modulus of the biodegradable resin composition.

The second biodegradable resin may include one or more selected from the group consisting of polybutylene azelate terephthalate (PBAzT), polybutylene sebacate terephthalate (PBSeT), polybutylene succinate terephthalate (PBST), polyhydroxyalkanoate (PHA), and polylactic acid (PLA).

The polylactic acid may be a polylactic acid that has stereocomplex crystals and a high melting point. In addition, the polylactic acid may be formed by solution mixing or melt mixing of poly L-lactic acid and poly D-lactic acid.

Specifically, the polylactic acid may include a unit represented by Chemical Formula 2 below:

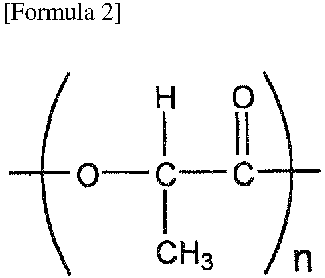

The polylactic acid may be a polymer including an L-lactic acid unit and/or a D-lactic acid unit. The polylactic acid may include poly L-lactic acid and/or poly D-lactic acid.

When the biodegradable resin composition is applied to an injection-molded article, the content of the poly D-lactic acid in the polylactic acid may be greater than about 0 wt% and about 2 wt% or less, greater than about 0 wt% and about 1.9 wt% or less, greater than about 0 wt% and about 1.8 wt% or less, or about greater than 0 wt% and about 1.7 wt% or less.

The biodegradable resin composition is applied to extruded products such as a nonwoven fabric, a vacuum-formed sheet, or a blown-molded article, the content of the poly D-lactic acid in the polylactic acid may be 3 wt% or more to 5 wt% or less, 3.5 wt% or more to 5 wt% or less, 3.5 wt% or more to 4.8 wt% or less, or 3.8 wt% or more to 4.8 wt% or less.

When the range is satisfied, the thermal and mechanical properties are excellent, and appropriate flowability may be provided in required processes, so that processability may be improved.

The poly L-lactic acid may be a polymer primarily including an L-lactic acid unit. The poly L-lactic acid may include the L-lactic acid unit in a content of about 90 mol% to about 100 mol%, about 91 mol% to about 100 mol%, about 92 mol% to about 100 mol%, about 93 mol% to about 100 mol%, about 94 mol% to about 100 mol%, about 95 mol% to about 100 mol%, about 96 mol% to about 100 mol%, or about 97mol% to about 100 mol%. The poly L-lactic acid may include a D-lactic acid unit and/or a unit other than lactic acid. The poly L-lactic acid may include the D-lactic acid unit and/or a unit other than lactic acid in a content of about 0 mol% to about 10 mol%, about 0 mol% to about 9 mol%, about 0 mol% to about 8 mol%, about 0 mol% to about 7 mol%, about 0 mol% to about 6 mol%, about 0 mol% to about 5 mol%, or about 0 mol% to about 3 mol%.

The poly D-lactic acid may be a polymer primarily including the D-lactic acid unit. The poly D-lactic acid may include the D-lactic acid unit in a content of about 90 mol% to about 100 mol%, about 91 mol% to about 100 mol%, about 92 mol% to about 100 mol%, about 93 mol% to about 100 mol%, about 94 mol% to about 100 mol%, about 95 mol% to about 100 mol%, or about 97 mol% to about 100 mol%. The poly D-lactic acid may include the L-lactic acid unit and/or a unit other than lactic acid. The poly D-lactic acid may include the L-lactic acid unit and/or a unit other than lactic acid in a content of about 0 mol% to about 10 mol%, about 0 mol% to about 9 mol%, about 0 mol% to about 8 mol%, about 0 mol% to about 7 mol%, about 0 mol% to about 6 mol%, about 0 mol% to about 5 mol%, or about 0 mol% to about 3 mol%.

The unit other than lactic acid may include units derived from dicarboxylic acids, polyhydric alcohols, hydroxycarboxylic acids, and lactones, which have a functional group capable of forming two or more ester bonds, and units derived from various polyesters, various polyethers, and various polycarbonates, which consist of these various components.

For example, the dicarboxylic acids may include succinic acid, adipic acid, azela phosphoric acid, sebacic acid, terephthalic acid, isophthalic acid, and the like. The polyhydric alcohols may include aliphatic polyhydric alcohols, such as ethylene glycol, propylene glycol, butanediol, pentanediol, hexanediol, octanediol, glycerin, sorbitan, neopentyl glycol, diethylene glycol, triethylene glycol, polyethylene glycol, and polypropylene glycol, and aromatic polyhydric alcohols obtained by adding ethylene oxide to bisphenol.

The hydroxycarboxylic acids may include glycolic acid, hydroxybutyric acid, and the like. For example, the lactones may include glycolide, ε-caprolactone glycolide, ε-caprolactone, β-propiolactone, δ-butyrolactone, β- or γ-butyrolactone, pivalolactone, δ-valerolactone, and the like.

The polylactic acid may be commercially available from Biomer Inc. under the name BIOMER^{™} L9000. In addition, the polylactic acid may be commercially available from Natureworks LLC (NATUREWORKS^{®}) or Mitsui Chemical (LACEA^{™}). In addition, the polylactic acid may be described in U.S. Patent Nos. 4,797,468; 5,470,944; 5,770,682; 5,821,327; 5,880,254; and 6,326,458, the entirety of which is incorporated in the present invention by reference for all purposes.

The polylactic acid may be modified with a surface treatment agent.

The surface of the polylactic acid may be modified with the surface treatment agent. Since the biodegradable resin composition contains polylactic acid due to the surface treatment agent, it may have improved compatibility with the first biodegradable resin, and the bleeding phenomenon that the polylactic acid flows out from the surface of a produced molded article may be suppressed.

The surface treatment agent may include an amide group. The surface treatment agent may include a fatty acid amide. The surface treatment agent including the amide group may be easily combined with the functional group of the polylactic acid, the surface of the polylactic acid may be more easily modified. Accordingly, the compatibility with the first biodegradable resin may be improved, and the bleeding phenomenon may be further suppressed.

The surface-modified polylactic acid may be prepared by the following method.

A surface treatment agent is added to the polylactic acid, and the polylactic acid and the surface treatment agent are stirred, so that the surface treatment agent may be bonded to the surface of the polylactic acid.

The stirring temperature may be the melting point of the surface treatment agent to the melting point + 50 °C of the surface treatment agent. The addition amount of the surface treatment agent may be 0.1 parts by weight to 5 parts by weight, 0.1 parts by weight to 4 parts by weight, 0.1 parts by weight to 3 parts by weight, or 0.5 parts by weight to 3 parts by weight, relative to 100 parts by weight of the polylactic acid.

The stirring time may be about 1 minute to about 60 minutes, about 1 minute to about 50 minutes, about 5 minutes to about 50 minutes, or about 5 minutes to about 40 minutes.

The polyhydroxyalkanoate may include a unit represented by Chemical Formula 3 below:

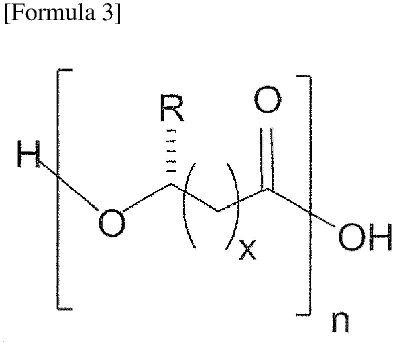

In Chemical Formula 3, R may be independently selected from the group consisting of a hydrogen atom, a hydrocarbon group, a hetero atom, and combinations thereof, n may be the number of repetitive units from 1 to 35,000, and x may be an integer from 1 to 5.

The polyhydroxyalkanoate may be a homopolymer or copolymer consisting of at least one moiety selected from the group consisting of 3-hydroxypropionate, 3-hydroxybutyrate, 3-hydroxyvalerate, 3-hydroxyhexanoate, 3-hydroxyheptanoate, 3-hydroxyoctanoate, 3-hydroxynonanoate, 3-hydroxydecanoate, 3-hydroxyundecanoate, 3-hydroxydodecanoate, and combinations thereof. In addition, the at least one moiety may have the same or different numbers of repetitive units.

The polyhydroxyalkanoate may be a copolymer containing a 3-hydroxybutyrate unit and a 3-hydroxyhexanoate unit as main constituent units.

The polyhydroxyalkanoate may include 80 mol% or more of the 3-hydroxybutyrate unit as a component. The polyhydroxyalkanoate may include the 3-hydroxybutyrate unit in an amount of approximately 85 mol% or more.

The polyhydroxyalkanoate may be a poly(3-hydroxybutyrate-co-3-hydroxyhexanoate) copolymer resin or a poly(3-hydroxybutyrate-co-3-hydroxyvalerate-co-3-hydroxyhexanoate) copolymer resin.

For example, the polyhydroxyalkanoate may be produced using a microorganism such as Alcaligenes eutrophus AC 32 (International deposit based on the Budapest Treaty, International depositary authority: Independent Administrative Corporation Industrial Technology Research Institute Patent Biological Deposit Center (Central No. 6, 1-1, Tsukubashi, Ibaraki Prefecture, Japan), Original deposit date: August 12, 1996, Transferred on August 7, 1997, Deposit number: FERM BP-6038, Transferred from original deposit FERM P-15786, J. Bacteriol., 179, 4821 (1997)) created by introducing an Aeromonas caviae-derived PHA synthesizing enzyme gene into Alcaligenes eutrophus.

The polyhydroxyalkanoate may be available commercially. The commercially available products of the polyhydroxyalkanoate may include ┌NODAX┘ of Danimer Co., ┌ENMAT┘ of Tianan Biopolymer Co., ┌PHACT┘ of CJ Co., and ┌Aonilex (registered trademark) X131N┘, ┌Aonilex (registered trademark) X131A┘, ┌Aonilex (registered trademark) 151A┘, ┌Aonilex (registered trademark) 151C┘, ┌PHBH (registered trademark) X331N┘, ┌PHBH (registered trademark) X131A┘, ┌PHBH (registered trademark) 151A┘, and ┌PHBH (registered trademark) 151C┘ of Kaneka Co.

The biodegradable resin composition includes an inorganic filler. The inorganic filler may be used as a support for the first biodegradable resin or first and second biodegradable resins included in the biodegradable resin composition. Accordingly, the crystallinity of the biodegradable resin composition may be controlled, thereby improving the dimensional stability at room temperature and high temperature.

The content of the inorganic filler may be 10 wt% to 90 wt%, 20 wt% to 90 wt%, 30 wt% to 90 wt%, 40 wt% to 90 wt%, 40 wt% to 80 wt%, or 47 wt% to 70 wt% based on the total weight of the biodegradable resin composition. When the range is satisfied, the dimensional stability at room temperature and high temperature may be improved, and it may be more appropriately applied to cosmetic container products requiring durability due to increased specific gravity.

The biodegradable resin composition may include the first biodegradable resin and the inorganic filler in a weight ratio of 90:10 to 30:70, 80:20 to 30:70, 70:30 to 30:70, or 60:40 to 30:70. When the range is satisfied, the crystallinity of the biodegradable resin composition may be improve, so that the dimensional stability at room temperature and high temperature may be improved.

The inorganic filler may have a specific surface area of 0.1 m²/g to 10.0 m²/g, 0.1 m²/g to 9.0 m²/g, 0.1 m²/g to 8.0 m²/g, 0.1 m²/g to 7.0 m²/g, 0.1 m²/g to 6.0 m²/g, 0.1 m²/g to 5.0 m²/g, 0.1 m²/g to 4.0 m²/g, or 0.1 m²/g to 3.0 m²/g. The specific surface area may be measured using a nitrogen gas adsorption method. When the range is satisfied, since the inorganic filler may be dispersed in the biodegradable resin, the biodegradability of the biodegradable resin may be increased, and the processability of the biodegradable resin may be improved.

The inorganic filler may have an average particle diameter of 0.1 µm to 10.0 µm, 0.1 µm to 9.0 µm, 0.1 µm to 8.0 µm, 0.1 µm to 7.0 µm, 0.1 µm to 6.0 µm, 0.1 µm to 5.0 µm, 0.1 µm to 4.0 µm, 0.1 µm to 3.0 µm, 1.0 µm to 5.0 µm, 1.0 µm to 4.0 µm, or 1.0 µm to 3.0 µm. The average particle diameter may be calculated based on the measurement results of a specific surface area by an air permeation method using a specific surface area measuring device. When the range is satisfied, an increase in viscosity may be prevented when mixing the biodegradable resin and the inorganic filler, and particle size uniformity may be improved.

The inorganic filler may have a sphericity of 0.30 to 0.95, 0.30 to 0.93, 0.30 to 0.90, 0.50 to 0.95, 0.50 to 0.93, 0.50 to 0.90, 0.60 to 0.95, 0.60 to 0.93, or 0.60 to 0.90. When the range is satisfied, biodegradability may be improved by containing many fine pores generated at the interface between the biodegradable resin and the inorganic filler. In addition, the strength and molding processability of a molded article may be increased.

The inorganic filler may include one or more selected from the group consisting of calcium carbonate, magnesium carbonate, zinc oxide, titanium oxide, silica, alumina, kaolin clay, talc, mica, wollastonite, aluminum hydroxide, magnesium hydroxide, aluminum silicate, magnesium silicate, calcium silicate, aluminum sulfate, magnesium sulfate, calcium sulfate, magnesium phosphate, barium sulfate, silica, zeolite, diatomaceous earth, sericite, white sand, calcium sulfite, potassium titanate, bentonite, graphite, and ferrite.

Preferably, the inorganic filler may include calcium carbonate (CaCO₃). In general, when a molded article manufactured using a biodegradable resin composition biodegrades, acid components may be generated. The acid components and the calcium carbonate may react to generate CO₂ and H₂O, so the biodegradation rate of the molded article into molecular units may be further increased. In addition, the calcium carbonate may neutralize the acid components, reducing environmental load and preventing acidification of the soil.

The calcium carbonate may be heavy calcium carbonate obtained by mechanically grinding or classifying natural calcium carbonate containing CaCO₃ as a main component, such as limestone, chalk, marble, shell, and coral.

The calcium carbonate may be surface-treated with an organic acid. By surface-treating the calcium carbonate with the organic acid, the dispersibility of the biodegradable resin composition may be increased and reactivity with the biodegradable resin may be improved. The surface treatment may be performed through a physical method such as plasma treatment and corona treatment or through a chemical method using a chemical agent such as a silane coupling agent, a titanium coupling agent, and a surfactant. The organic acid may include a higher fatty acid, a higher fatty acid ester, a higher fatty acid amide, and a higher fatty acid, for example, calcium stearate.

The surface-treated calcium carbonate may be prepared by the following method.

First, calcium carbonate powder may be prepared through a grinding process. Then, the calcium carbonate powder may be classified to obtain calcium carbonate of a desired particle size.

Next, the calcium carbonate may be heated at approximately 200 °C to approximately 800 °C using a heating device selected from a kiln, an electric furnace, or a microwave. The heat treatment time may be approximately 5 minutes to approximately 30 minutes, approximately 7 minutes to approximately 15 minutes, or approximately 7 minutes to approximately 14 minutes. The heat treatment temperature may be approximately 250 °C to approximately 700 °C or approximately 300 °C to approximately 600 °C. By heat treating the calcium carbonate under the conditions described above, moisture in the calcium carbonate may be easily removed, the organic acid may be easily bonded to the surface of the calcium carbonate, and agglomeration of the calcium carbonate may be minimized.

Next, a process of treating the surface of the calcium carbonate may be performed by adding an organic acid to the heat-treated calcium carbonate. The process temperature may be 70 °C to approximately 130 °C. Based on 100 parts by weight of the calcium carbonate, the organic acid may be added in an amount of approximately 0.5 parts by weight to approximately 5 parts by weight, approximately 0.5 parts by weight to approximately 4 parts by weight, approximately 0.5 parts by weight to approximately 3 parts by weight, approximately 0.5 parts by weight to approximately 2 parts by weight, approximately 0.6 parts by weight to approximately 5 parts by weight, approximately 0.6 parts by weight to approximately 4 parts by weight, approximately 0.6 parts by weight to approximately 3 parts by weight, approximately 0.6 parts by weight to approximately 2 parts by weight, approximately 0.7 parts by weight to approximately 5 parts by weight, approximately 0.7 parts by weight to approximately 4 parts by weight, approximately 0.7 parts by weight to approximately 3 parts by weight, or approximately 0.7 parts by weight to approximately 2 parts by weight. The process time may be approximately 1 minute to approximately 60 minutes, approximately 10 minutes to approximately 30 minutes, or approximately 5 minutes to approximately 20 minutes.

Next, the surface-treated calcium carbonate may be subjected to additional processes such as grinding and classifying aggregates generated in the surface treatment process. In the surface-treated calcium carbonate, based on a total weight, the content of the organic acid may be approximately 0.1 wt% to approximately 3 wt%, approximately 0.1 wt% to approximately 2 wt%, approximately 0.1 wt% to approximately 1 wt%, approximately 0.2 wt% to approximately 3 wt%, approximately 0.2 wt% to approximately 2 wt%, approximately 0.2 wt% to approximately 1 wt%, approximately 0.3 wt% to approximately 3 wt%, approximately 0.3 wt% to approximately 2 wt%, or approximately 0.3 wt% to approximately 1 wt%.

The surface-treated calcium carbonate may be partially oxidized by the organic acid. The surface-treated calcium carbonate may partially contain oxidized calcium (CaO). Based on 100 volume% of the surface-treated calcium carbonate particles, the ratio of the oxidized calcium may be 5 volume% or less, 4 volume% or less, 3 volume% or less, 2 volume% or less, 1 volume% or less, 0.01 volume% or more and 5 volume% or less, 0.01 volume% or more and 4 volume% or less, 0.01 volume% or more and 3 volume% or less, 0.01 volume% or more and 2 volume% or less, or 0.01 volume% or more and 1 volume% or less. The ratio of the oxidized calcium may be measured by ethylenediaminetetraacetic acid (EDTA) titration according to JIS R 9011. When the range is satisfied, the uniformity of the surface of the calcium carbonate may be improved, and the elution of organic acids from the surface of the calcium carbonate may be minimized, thereby improving hydrolysis resistance.

The biodegradable resin composition may further include a reinforcing agent. The reinforcing agent may be a fiber derived from biomass. The reinforcing agent may include nanocellulose. The nanocellulose may be natural nanocellulose in the form of a gel or dry powder. The dispersion stability, strength, and processability of a biodegradable resin containing the nanocellulose may be improved.

The nanocellulose may have a diameter of 1 nm to 100 nm, 1 nm to 95 nm, 5 nm to 90 nm, 10 nm to 80 nm, 5 nm to 60 nm, or 15 nm to 60 nm. The nanocellulose may have a length of 5 nm to 5 µm, 5 nm to 1 µm, 10 nm to 700 nm, 20 nm to 500 nm, 60 nm to 300 nm, 80 nm to 200 nm, or 100 nm to 250 nm. When the above ranges are satisfied, the strength and tear strength of the biodegradable resin composition may be further improved.

The nanocellulose may be in the form of dry powder or gel having aggregated secondary particles rather than single particles, and the size of the secondary particles may be 1 µm to 50 µm, 2 µm to 45 µm, or 5 µm to 50 µm. The nanocellulose may be in the form of freeze-dried powder to reduce the volume thereof for easy storage and transportation.

The nanocellulose may have an average particle diameter of 200 nm or less, 190 nm or less, or 185 nm or less. The particle diameter deviation may be 20 % or less, 18 % or less, or 16 % or less. When the range is satisfied, the dispersibility and durability of the nanocellulose may be improved.

The nanocellulose may function as a crystal nucleating agent that improves the crystallization rate of the biodegradable resin composition and increases the crystallization temperature of the biodegradable resin composition. The nanocellulose may include one or more selected from the group consisting of cellulose nanocrystals, cellulose nanofibers, and micro fibrillated cellulose. In terms of strength and thermal properties, the cellulose nanocrystals or the cellulose nanofibers are preferred.

The nanocellulose may perform UV-resistant function and may impart adequate UV-resistant properties, biodegradation rate, and hydrolysis rate to the biodegradable resin. The nanocellulose may include one or more selected from the group consisting of hydroxymethyl cellulose, hydroxyethyl cellulose, hydroxypropyl cellulose, hydroxypropyl methyl cellulose, cellulose acetate, methyl cellulose, ethyl cellulose, propyl cellulose, butyl cellulose, pentyl cellulose, hexyl cellulose, and cyclohexyl cellulose.

The nanocellulose may be pretreated by a bead mill or by ultrasonic waves. The nanocellulose may be water-dispersed nanocellulose pretreated with a bead mill or pretreated with ultrasonic waves.

The nanocellulose may be obtained by dispersing cellulose nanocrystals in the form of dry powder or gel with a particle diameter of 1 µm to 50 µm in water and then pre-treating the cellulose nanocrystals with a bead mill or ultrasonic waves. In this case, the number of nanocellulose particles may increase, thereby improving dispersibility.

Based on a total weight of the nanocellulose, the nanocellulose may be pre-treated with 0.01 to 10 wt%, 0.05 to 8 wt%, 0.1 to 8 wt%, 0.5 to 6 wt%, or 0.7 to 6 wt% of a silane coupling agent. When the range is satisfied, interfacial adhesion, dispersibility, and compatibility may be maximized. Thus, the mechanical properties and durability of a biodegradable resin composition including the nanocellulose may be further improved.

The biodegradable resin may include the nanocellulose in a content of 0.01 to 3 wt%, 0.01 to 2.5 wt%, 0.05 to 2 wt%, 0.07 to 1.8 wt%, 0.1 to 1.2 wt%, 0.1 to 1 wt%, or 0.15 to 0.7 wt% based on the total weight of the biodegradable resin. When the range is satisfied, the biodegradability and strength of the biodegradable resin composition may be further improved.

The biodegradable resin composition may include an oligomer. The oligomer may have a weight average molecular weight of approximately 400 g/mol to approximately 1,300 g/mol. Based on a weight of the biodegradable resin, the oligomer may be included in the biodegradable resin composition in an amount of approximately 3,000 ppm to approximately 30,000 ppm, approximately 5,000 ppm to approximately 20,000 ppm, or approximately 5,000 ppm to approximately 15,000 ppm. The oligomer may be a reaction product of at least two of the diol, the aromatic dicarboxylic acid, and the aliphatic dicarboxylic acid. The oligomer may be a reaction product of 1,4-butanediol, terephthalic acid, and adipic acid.

The biodegradable resin composition may include a plasticizer. The plasticizer may impart processability or flexibility to a molded article manufactured using the biodegradable resin composition. The plasticizer may be glycerol, an acrylate, glycerin, glycerol monostearate (GMS), sorbitol, or a mixture thereof. The plasticizer may be included in a content of 0.1 wt% to 15 wt%, 0.1 wt% to 14 wt%, 0.1 wt% to 13 wt%, 0.1 wt% to 12 wt%, 0.1 wt% to 11 wt%, 0.1 wt% to 10 wt%, 0.1 wt% to 9 wt%, 0.1 wt% to 8 wt%, 0.1 wt% to 7 wt%, 0.1 wt% to 6 wt%, or 0.1 wt% to 5 wt% based on the total weight of the biodegradable resin composition. When the range is satisfied, a molded article manufactured from the biodegradable resin composition may have improved elongation and tear strength.

The biodegradable resin composition may include an antioxidant. The antioxidant may include one or more selected from the group consisting of a phosphorus-based antioxidant, a phenol-based antioxidant, and a pentaerythritol-based antioxidant.

The phosphorus-based antioxidant may include one or more selected from the group consisting of triesters of phosphorous acids such as triphenyl phosphite, trisnonylphenyl phosphite, and tris(2,4-di-t-butylphenyl)phosphite, diesters, monoesters, trimethyl phosphate, triethyl phosphate, tributyl phosphate, trioctyl phosphate, triphenyl phosphate, tricresyl phosphate, tris(nonylphenyl)phosphate, and 2-ethylphenyl diphenyl phosphate.

The phenol-based antioxidant may include one or more selected from the group consisting of α-tocopherol, butylhydroxytoluene, sinapyl alcohol, vitamin E, n-octadecyl-3-(3,5-di-t-butyl-4-hydroxyphenyl)propionate, 2-t-butyl-6-(3'-t-butyl-5'-methyl-2'-hydroxybenzyl)-4-methylphenyl acrylate, 2, 6-di-t-butyl-4-(N,N-dimethylaminomethyl)phenol, 3,5-di-t-butyl-4-hydroxybenzyl phosphonate diethyl ester, 2,2-bis(((3-(3,5-di-tert-butyl-4-hydroxyphenyl)propanoyl)oxy)methyl)propane-1,3-diyl bis(3-(3,5-di-tert)-butyl-4-hydroxyphenyl)propanoate), pentaerythritol tetrakis(3,5-di-tert-butyl-4-hydroxyhydrocinnamate), pentaerythritol tetrakis[3-(3,5-di-tert-butyl-4-hydroxyphenyl)propionate], and tetrakis[3-(3,5-di-t-butyl-4-hydroxyphenyl)propionyloxymethyl] methane.

The antioxidant may further include one or more selected from the group consisting of BHT, ascorbic acid, catechin, quercetin, dodecyl gallate, TBHQ, Ralox, Irganox 1135, Irganox 1076, nordihydroguaiaretic acid, epicatechin gallate, epigallocatechin gallate, epigallocatechin, propyl gallate, 2,3,5-trihydroxybutyrophenone, butylated hydroxyanisole, 4-hydroxymethyl-2,6-di-tert-butylphenol, α-tocopherol, resveratrol, rutin, astaxanthin, lycopene, beta-carotene, and melatonin.

The content of the antioxidant may be 5 wt% or less, 4 wt% or less, 3 wt% or less, 2 wt% or less, 1.5 wt% or less, 1 wt% or less, 0.5 wt% or less, 0.3 wt% or less, 0 to 5 wt%, 0.01 to 4 wt%, 0.1 to 3 wt%, 1 to 3 wt%, 1 to 2 wt%, 0.01 to 0.3 wt%, 0.05 to 0.3 wt%, 0.15 to 0.3 wt%, or 0.2 to 0.3 wt% based on the total weight of the biodegradable resin composition.

The antioxidant may include both the phosphorus-based antioxidant and the phenol-based antioxidant. When the antioxidant includes both the phosphorus-based antioxidant and the phenol-based antioxidant, the weight ratio of the phosphorus-based antioxidant to the phenol-based antioxidant may be 1:10 to 10:1, 1:5 to 5:1, 1:1 to 5:1, 2:1 to 4:1, 2.5:1 to 3.5:1, 1:5 to 1:1, 1:2 to 1:4, or 1:2.5 to 1:3.5. When the range is satisfied, oxidation of the biodegradable resin composition may be delayed in various temperature ranges.

The biodegradable resin composition may include a heat stabilizer.

The heat stabilizer may be a phosphorus heat stabilizer. The heat stabilizer may include one or more selected from the group consisting of amine-based high-temperature heat stabilizers (e.g., tetraethylenepentamine), triethyl phosphonoacetate, phosphoric acid, phosphorous acid, polyphosphoric acid, trimethyl phosphate, triethyl phosphate, trimethyl phosphine, and triphenyl phosphine. The heat stabilizer may be an antioxidant that has an antioxidant function. Based on a total weight of the biodegradable resin, the heat stabilizer may be included in an amount of 3,000 ppm or less, 10 ppm to 3,000 ppm, 20 ppm to 2,000 ppm, 20 ppm to 1,500 ppm, or 20 ppm to 1,000 ppm.

The biodegradable resin composition may include a lubricant.

The lubricant may include one or more selected from the group consisting of fatty acid-based lubricants such as stearic acid; aliphatic alcohol-based lubricants; aliphatic amide-based lubricants such as stearamide; aliphatic ester-based lubricants such as stearic acid-n-butyl, hydroxystearic acid methyl, polyhydric alcohol fatty acid esters, saturated fatty acid esters, and ester wax; and fatty acid metal soap-based lubricants. Specifically, the lubricant may be a stearate-based lubricant, and may include one or more selected from the group consisting of calcium stearate, zinc stearate, barium stearate, magnesium stearate, glycerin stearate, and butyl stearate. The stearate-based lubricant may reduce heat generation due to friction during mixing, melting, and processing of raw materials, and has excellent dispersing and lubricating effects for a biodegradable polyester resin compared to the price thereof, thereby improving manufacturing efficiency.

The content of the lubricant may be 5 wt% or less, 4 wt% or less, 3 wt% or less, 2 wt% or less, 1 wt% or less, less than 1 wt%, 0.9 wt% or less, 0.8 wt% or less, 0.7 wt% or less, 0.5 wt% or less, 0.3 wt% or less, or 0.1 wt% or less based on the total weight of the biodegradable resin composition. When the range is satisfied, the manufacturing efficiency may be improved without deteriorating the physical properties of the biodegradable resin composition.

The biodegradable resin composition may include a flame retardant. The flame retardant may include one or more selected from the group consisting of a halogen-based flame retardant, a phosphorus-based flame retardant, and a non-phosphorus halogen-based flame retardant such as metal hydrates.

The halogen-based flame retardant may include one or more selected from the group consisting of halogenated bisphenolic compounds such as halogenated bisphenyl alkanes, halogenated bisphenyl ethers, halogenated bisphenyl thioethers, and halogenated bisphenyl sulfones; and bisphenol-bis(alkyl ether) compounds such as brominated bisphenol A, brominated bisphenol S, chlorinated bisphenol A, and chlorinated bisphenol S.

The phosphorus-based flame retardant may include one or more selected from the group consisting of tris(diethyl phosphinic acid)aluminum, bisphenol A bis(diphenyl phosphate), phosphoric acid triaryl isopropyl, cresyl di-2,6-xylenyl phosphate, and aromatic condensation phosphoric acid ester.

The metal hydrates may include aluminum trihydrate, magnesium dihydroxide, or combinations thereof.

Flame retardant aids for improving the flame retardant effect may include one or more selected from the group consisting of antimony oxides such as antimony trioxide and antimony pentoxide, zinc oxide, iron oxide, aluminum oxide, molybdenum oxide, titanium oxide, calcium oxide, and magnesium oxide.

The biodegradable resin composition may include a foaming agent. The foaming agent may be mixed with the molten biodegradable resin composition or injected by applying pressure. The foaming agent may be a phase change from solid to gas or from liquid to gas or gas itself, and is used to control the foaming ratio (foaming density) of a foam sheet.

The foaming agent may include one or more selected from the group consisting of aliphatic hydrocarbons, alicyclic hydrocarbons, halogenated hydrocarbons, inorganic gases and water.

The biodegradable resin composition may include a dispersant. The dispersant may improve the dispersibility of a solvent and solute. The dispersant may include one or more selected from the group consisting of aliphatic polyesters, polylactic acid, polyglycolic acid, polycaprolactone, and polyhydroxyalkanoate.

Based on a total weight of the biodegradable resin composition, the dispersant may be included in an amount of 1 to 20 wt%, 1 to 15 wt%, 1 to 13 wt%, 1 to 11 wt%, 2 to 10 wt%, 5 to 15 wt%, 7 to 12 wt%, 2 to 8 wt%, 5 to 8 wt%, or 2 to 5 wt%.

The biodegradable resin composition may include a chain extender. The chain extender may include one or more selected from the group consisting of aromatic diisocyanates, aliphatic diisocyanates, isocyanurates, bisoxazolines, carboxylic acid anhydrides, and epoxides.

The aromatic diisocyanates may include one or more selected from the group consisting of tolylene 2,4-diisocyanate, tolylene 2,6-diisocyanate, 2,2'-diphenylmethane diisocyanate, 2,4'-diphenylmethane diisocyanate, 4,4'-diphenylmethane diisocyanate, naphthylene 1,5-diisocyanate, and xylylene diisocyanate.

The aliphatic diisocyanates may include one or more selected from the group consisting of 1,6-hexamethylene diisocyanate, isophorone diisocyanate, and methylene bis(4-isocyanatocyclohexane).

The isocyanurates may include isophorone diisocyanate or methylene bis(4-isocyanatocyclohexane).

The bisoxazolines may include one or more selected from the group consisting of 2,2'-bis(2-oxazoline), bis(2-oxazolinyl)methane, 1,2-bis(2-oxazolinyl)ethane, 1,3-bis(2-oxazolinyl)propane, and 1,4-bis(2-oxazolinyl)butane.

The epoxide refers to an epoxy-containing copolymer based on at least one of styrene, acrylic acid ester, and/or methacrylic acid ester, and is preferably a copolymer having a glycidyl (meth)acrylate content of greater than 20, 30, or 50 wt%.

The chain extender may be included in an amount of 1.5 wt% or less, 1.4 wt% or less, 1.3 wt% or less, 1.2 wt% or less, 1.1 wt% or less, 1 wt% or less, 0.9 wt% or less, 0.8 wt% or less, 0.7 wt% or less, 0.6 wt% or less, 0.5 wt% or less, 0.4 wt% or less, 0.3 wt% or less, 0 wt% to 1.5 wt%, 0.01 wt% to 1.5 wt%, 0.1 wt% to 1.5 wt%, 0.1 wt% to 1.0 wt%, 0.1 wt% to 0.9 wt%, 0.1 wt% to 0.8 wt%, 0.1 wt% to 0.7 wt%, 0.1 wt% to 0.6 wt%, or 0.1 wt% to 0.5 wt%, based on the total weight of the biodegradable resin composition.

The biodegradable resin composition may include a hydrolysis inhibitor. When the weight average molecular weight (Mw) of the hydrolysis inhibitor is large, the volatility is low and the hydrolytic resistance may be improved. When the weight average molecular weight (Mw) of the hydrolysis inhibitor is small, the compatibility with a biodegradable resin may be increased.

As the hydrolysis inhibitor, two kinds of hydrolysis inhibitors having different weight average molecular weights may be used. One kind of hydrolysis inhibitor having a weight average molecular weight (Mw) of 10,000 g/mol or less, 9,000 g/mol or less, 8,000 g/mol or less, 7,000 g/mol or less, 6,000 g/mol or less, or 5,000 g/mol or less may be used to increase compatibility with a biodegradable resin, and one kind of hydrolysis inhibitor having a weight average molecular weight of 10,000 g/mol or more, 20,000 g/mol or more, 30,000 g/mol or more, 40,000 g/mol or more, or 50,000 g/mol or more may be used to improve low volatility and hydrolysis resistance. The weight average molecular weight may be measured as a relative value for a standard PS (standard polystyrene) sample through GPC using THF as an eluent. When the range is satisfied, the mechanical properties and hydrolysis resistance of the biodegradable resin composition may be improved.

The hydrolysis inhibitor may include a carbodiimide-based compound. The carbodiimide-based compound may react with moisture and acid to convert into a urea structure, thereby reducing the reactivity among moisture, acid and an ester group included in a biodegradable resin, and thus reducing the phenomenon of the biodegradable resin being hydrolyzed by moisture and acid. In conclusion, the hydrolysis resistance of the biodegradable resin composition may be improved.

The carbodiimide-based compound may include a compound represented by Formula 4 below:

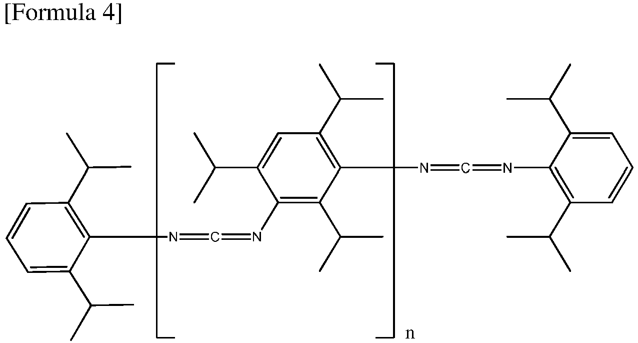

In Formula 4, n is an integer from 1 to 20.

The carbodiimide-based compound may be one or more selected from the group consisting of N,N'-di-o-tolylcarbodiimide, N,N'-diphenylcarbodiimide, N,N'-dioctyldecylcarbodiimide, N,N'-di-2,6-diketylphenylcarbodiimide, N-tolyl-N'cyclohexylcarbodiimide, N,N'-di-2,6-diisopropylphenylcarbodiimide, N,N'-di-2,6-di-tert-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, N,N'-di-p-tolylcarbodiimide, p-phenylene-bis-di-o-tolylcarbodiimide, p-phenylene-bisdicyclohexylcarbodiimide, hexamethylene-bisdicyclohexylcarbodiimide, a homopolymer of ethylene-bisdiphenylcarbodiimide and benzene-2,4-diisocyanato-1,3,5-tris(1-methylethyl), and a copolymer of 2,4-diisocyanato-1,3,5-tris(1-methylethyl) and 2,6-diisopropyl diisocyanate.

The weight average molecular weight (Mw) of the carbodiimide-based compound may be 500 g/mol to 100,000 g/mol, 600 g/mol to 100,000 g/mol, 700 g/mol to 100,000 g/mol, 800 g/mol to 90,000 g/mol, 900 g/mol to 80,000 g/mol, 1,000 g/mol to 70,000 g/mol, 1,000 g/mol to 60,000 g/mol, or 1,000 g/mol to 50,000 g/mol.

The content of the NCN group in the carbodiimide-based compound may be 1 wt% to 20 wt%, 1 wt% to 19 wt%, 1 wt% to 18 wt%, 1 wt% to 17 wt%, 1 wt% to 16 wt%, 1 wt% to 15 wt%, 2 wt% to 15 wt%, 3 wt% to 15 wt%, 4 wt% to 15 wt%, 5 wt% to 15 wt%, or 6 wt% to 15 wt%. The content of the NCN group in the carbodiimide-based compound may be measured by titration with oxalic acid. When the range is satisfied, the hydrolysis resistance of the biodegradable resin composition may be improved without deterioration of the compatibility with the biodegradable resin.

The content of the hydrolysis inhibitor may be 0.1 wt% to 5.0 wt%, 0.1 wt% to 4.0 wt%, 0.1 wt% to 3.0 wt%, 0.1 wt% to 2.0 wt%, 0.1 wt% to 1.5 wt%, or 0.1 wt% to 1.0 wt% based on the total weight of the biodegradable resin composition. When the range is satisfied, the hydrolysis resistance and odor reduction effect of the biodegradable resin composition may be improved.

The biodegradable resin composition may include a compound including a urea group in a content of 0.01 wt% to 10.00 wt%, 0.01 wt% to 9.00 wt%, 0.01 wt% to 8.00 wt%, 0.01 wt% to 7.00 wt%, 0.01 wt% to 6.00 wt%, 0.01 wt% to 5.00 wt%, 0.01 wt% to 4.00 wt%, or 0.01 wt% to 3.00 wt% based on the total weight of the biodegradable resin composition. When the range is satisfied, the ratio of the ester group included in the biodegradable resin which can react with moisture or acid is reduced, so that the hydrophilicity may be improved.

A biodegradable resin specimen manufactured from the biodegradable resin composition has a mold shrinkage ratio of 1.0 % or less measured according to Measurement Method 1 below:

### [Measurement Method 1]

1) The biodegradable resin composition is placed between a pair of molds having a size of 60 mm in a transverse direction × 60 mm in a longitudinal direction, and then a biodegradable resin specimen having an average thickness of 2 mm is manufactured at 180 °C under a pressure of 20 Mpa.
2) The biodegradable resin specimen is removed from the molds, and after 24 hours, a shrinkage ratio in the transverse direction of the biodegradable resin specimen and a shrinkage ratio in the longitudinal direction thereof are calculated.
3) The mold shrinkage ratio of the biodegradable resin specimen is calculated according to Equation 1 below: Mold shrinkage ratio (%) of biodegradable resin specimen = (Shrinkage ratio in transverse direction + Shrinkage ratio in longitudinal direction)/2

In Equation 1, the shrinkage ratio in the transverse direction is calculated by Equation 2 below, the shrinkage ratio in the longitudinal direction is calculated by Equation 3 below: Shrinkage ratio (%) in transverse direction = (Transverse length (mm) of biodegradable resin specimen after 24 hours/60 mm) × 100 Shrinkage ratio (%) in longitudinal direction = (Longitudinal length (mm) of biodegradable resin specimen after 24 hours/60 mm) × 100

In the biodegradable resin specimen after 24 hours, the "24 hours" may be an indicator of a general cooling time used in injection molding when the biodegradable resin composition is manufactured into a biodegradable molded article by the injection molding.

The "mold shrinkage ratio" of the biodegradable resin specimen may be an indicator of a balance between dimensional stability and physical properties that are in a trade-off relationship with the dimensional stability, when the biodegradable resin composition is manufactured into a biodegradable molded product by the injection molding.

The injection molding refers to a method of melting a biodegradable resin composition, injecting the melted biodegradable resin composition into a mold, and cooling it for a certain time to produce a solidified biodegradable resin composition. The injection molding may be affected by high temperature during the process of melting the biodegradable resin composition, and processability, mechanical properties, dimensional stability, etc. may vary depending on the characteristics of the biodegradable resin composition during the cooling process.

The biodegradable resin composition according to the present invention includes a first biodegradable resin having a glass transition temperature (Tg) of -15 °C or lower, and a biodegradable molded article manufactured from the biodegradable resin composition may be eco-friendly and may exhibit excellent tensile strength and elongation. However, due to the characteristics of the first biodegradable resin having a low glass transition temperature, the chain fluidity of the polymer may be significantly changed during the cooling process, and thus the dimensional stability is poor due to the high shrinkage ratio during injection molding, which limits its application to products.

Accordingly, since the biodegradable resin composition according to the present invention includes the first biodegradable resin having a glass transition temperature (Tg) of - 15 °C or lower, and an inorganic filler, and the mold shrinkage ratio of the biodegradable resin specimen measured according to Measurement Method 1 is adjusted to 1.0 % or less, a volume change may be minimized when the biodegradable resin composition is manufactured into a biodegradable molded article by injection molding, so that the dimensional stability at room temperature and high temperature may be improved. In addition, flexural strength, flexural modulus, and specific gravity are improved, and, accordingly, mechanical properties are improved, so that it may be more appropriately applied to cosmetic container products requiring preservation function, durability, etc.

The biodegradable resin specimen may have a mold shrinkage ratio of 1.0 % or less, 0.5 % or less, 0.45 % or less, 0.4 % or less, 0.3 % or less, 0.25 % or less, or 0.2 % or less.

When the range is satisfied, dimensional stability may be improved without deterioration of processability and mechanical properties.

The first thermal expansion coefficient, measured according to Measurement Method 2 below, of a biodegradable resin specimen sample manufactured from the biodegradable resin composition may be 75 pm/(m. °C) to 290 pm/(m. °C):

### [Measurement Method 2]

1) The biodegradable resin specimen is cut into 20 mm in a transverse direction × 4 mm in a longitudinal direction × 0.7 mm in thickness to manufacture a biodegradable resin specimen sample.
2) The first thermal expansion coefficient of the biodegradable resin specimen sample is measured in a range of 10 °C to 40 °C while heating from 0 °C to 100 °C at a rate of 5 °C/min using a thermomechanical analyzer.

The second thermal expansion coefficient, measured according to Measurement Method 2, of the biodegradable resin specimen sample manufactured from the biodegradable resin composition may be 100 µm/(m·°C) to 1,000 µm/(m·°C) in a range of 80 °C to 100 °C.

The first thermal expansion coefficient may be an indicator representing the dimensional stability of the biodegradable resin composition at room temperature. The second thermal expansion coefficient may be an indicator representing the dimensional stability of the biodegradable resin composition at high temperature.

The first thermal expansion coefficient may be 75 pm/(m. °C) to 290 pm/(m. °C), 90 µm/(m·°C) to 290 µm/(m·°C), 108 µm/(m·°C) to 250 µm/(m·°C), or 108 µm/(m·°C) to 214 µm/(m·°C). When the range is satisfied, the dimensional stability may be improved in a process of cooing the biodegradable resin composition during the injection molding. The dimensional stability at room temperature may be improved by the above-described second biodegradable resin.

The second thermal expansion coefficient may be 100 *µ*m/(m·°C) to 1,000 *µ*m/(m·°C), 200 *µ*m/(m·°C) to 1,000 *µ*m/(m·°C), 300 *µ*m/(m·°C) to 1,000 *µ*m/(m·°C), 500 *µ*m/(m·°C) to 900 *µ*m/(m·°C), or 569 *µ*m/(m·°C) to 871 *µ*m/(m·°C). When the range is satisfied, the dimensional stability may be improved in a process of melting the biodegradable resin composition during the injection molding. The dimensional stability at high temperature may be improved by combining the first biodegradable resin and the second biodegradable resin.

The specific gravity, measured according to Measurement Method 3 below, of a biodegradable resin pellet manufactured from the biodegradable resin composition may be 1.30 to 2.00.

### [Measurement Method 3]

1) The biodegradable resin composition is extruded at 175 °C, and then cooled at 5 °C to manufacture a biodegradable resin pellet.
2) The specific gravity of the biodegradable resin pellet is measured at 23 °C according to ASTM D792.

The specific gravity may be 1.30 to 1.90, 1.30 to 1.80, 1.30 to 1.70, 1.40 to 1.70, 1.50 to 1.70, or 1.59 to 1.63. When the range is satisfied, it may be more appropriately applied to cosmetic container products requiring preservation functions, durability, etc. The specific gravity may be adjusted depending upon the content of the above-described inorganic filler.

The biodegradable molded article according to the present invention may be manufactured from the biodegradable resin composition described above.

The biodegradable molded article includes the biodegradable resin composition including the first biodegradable resin having a glass transition temperature (Tg) of -15 °C or lower, and an inorganic filler, and the mold shrinkage ratio of the biodegradable resin specimen measured according to Measurement Method 1 below is 1.0 % or less:

### [Measurement Method 1]

1) The biodegradable resin composition is placed between a pair of molds having a size of 60 mm in a transverse direction × 60 mm in a transverse direction, and then a biodegradable resin specimen having an average thickness of 2 mm at 180 °C under a pressure of 20 Mpa is manufactured.
2) The biodegradable resin specimen is removed from the mold and, after 24 hours, a shrinkage ratio in the transverse direction of the biodegradable resin specimen and a shrinkage ratio in the longitudinal direction thereof are calculated.
3) The mold shrinkage ratio of the biodegradable resin specimen is calculated according to Equation 1 below: Mold shrinkage ratio of biodegradable resin specimen (%) = (Shrinkage ratio in transverse direction + Shrinkage ratio in longitudinal direction)/2

In Equation 1, the shrinkage ratio in the transverse direction is calculated by Equation 2 below, and the shrinkage ratio in the longitudinal direction is calculated by Equation 3 below: Shrinkage ratio in transverse direction (%) = (Transverse direction length (mm) of biodegradable resin specimen after 24 hours/60 mm) × 100 Shrinkage ratio in longitudinal direction (%) = (Longitudinal direction length (mm) of biodegradable resin specimen after 24 hours/60 mm) × 100

The first biodegradable resin, the inorganic filler, the mold shrinkage ratio and the biodegradable resin composition may be the same as the above-described first biodegradable resin, inorganic filler, mold shrinkage ratio and biodegradable resin composition.

The biodegradable molded article may be a nonwoven fabric, a vacuum-formed sheet, a blown-molded article, or an injection-molded article.

The biodegradable molded article may be a biodegradable film. The thickness of the biodegradable film may be 5 *µ*m to 500 *µ*m, 5 *µ*m to 400 *µ*m, 5 *µ*m to 350 *µ*m, 10 *µ*m to 350 *µ*m, 15 *µ*m to 350 *µ*m, 20 *µ*m to 350 *µ*m, 25 *µ*m to 300 *µ*m, 30 *µ*m to 300 *µ*m, 35 *µ*m to 300 *µ*m, or 40 *µ*m to 300 *µ*m. The tensile strength of the biodegradable film may be 5 MPa or more, 7 MPa or more, 9 MPa or more, 10 MPa or more, 11 MPa or more, 100 MPa or less, 95 MPa or less, 90 MPa or less, or 5 MPa or more to 100 MPa or less. When the range is satisfied, the film is not easily torn, has excellent mechanical properties, and may be easily decomposed when discarding a biodegradable molded article containing the same.

The biodegradable film may have an elongation of 85% or more, 90% or more, 95% or more, 1,000% or less, 950% or less, 900% or less, or 850% or less. The elasticity of the biodegradable molded article may be secured, so it may withstand a certain load.

The biodegradable molded article may be a biodegradable sheet. The thickness of the biodegradable sheet may be 5 *µ*m to 1,000 *µ*m, 10 *µ*m to 1,000 *µ*m, 15 *µ*m to 1,000 *µ*m, 20 *µ*m to 1,000 *µ*m, 25 *µ*m to 1,000 µm, 30 *µ*m to 1,000 *µ*m, 35 *µ*m to 1,000 *µ*m, or 40 *µ*m to 1,000 *µm*. The tensile strength of the biodegradable sheet may be 5 MPa or more, 6 MPa or more, 9 MPa or more, 10 MPa or more, 11 MPa or more, 12 MPa or more, 55 MPa or less, 54 MPa or less, 53 MPa or less, 52 MPa or less, 51 MPa or less, or 50 MPa or less. The tear strength of the biodegradable sheet may be 100 N/cm or more, 110 N/cm or more, 120 N/cm or more, 130 N/cm or more, 140 N/cm or more, 150 N/cm or more, 700 N/cm or less, 650 N/cm or less, 600 N/cm or less, 550 N/cm or less, or 500 N/cm or less. When the range is satisfied, the sheet is not easily torn, and may be easily decomposed when discarding a biodegradable molded article containing the same.

The biodegradable sheet may have an elongation of 10% or more, 15% or more, 20% or more, 50% or less, 70% or more, 700% or less, 650% or less, 550% or less, 500% or less, or 450% or less. When the range is satisfied, the elasticity of a biodegradable molded article may be secured, so it may withstand a certain load.

Preferably, the biodegradable molded article may be an injection-molded article, and the injection-molded article may be a cosmetic container. The biodegradable molded article has a high specific gravity, so it may be more appropriately applied to cosmetic container products requiring preservation function, durability, etc.

A method of manufacturing the biodegradable molded article according to the present invention may include a step of preparing a prepolymer by esterifying a diol component and a dicarboxylic acid component, a step of preparing a first biodegradable resin having a glass transition temperature (Tg) of -15 °C or lower by polycondensing the prepolymer, a step of preparing a biodegradable resin composition by mixing the first biodegradable resin with an inorganic filler, and a step of injection-molding the biodegradable resin composition.

The preparation method may include a step of preparing a prepolymer by esterifying a diol component and a dicarboxylic acid component.

The diol component and the dicarboxylic acid component may be the same as those of the above-described biodegradable resin composition. In step, the prepolymer may be prepared by performing a one-step esterification reaction of the diol component, the dicarboxylic acid component, and optionally, a composition containing the nanocellulose or by a two-step esterification reaction consisting of a first esterification reaction and a second esterification reaction.

The two-step esterification reaction may include a step of performing the first esterification reaction of the diol component and the dicarboxylic acid component and a step of performing the second esterification reaction by adding the diol component and the dicarboxylic acid component to the product of the step.

When the biodegradable resin includes the nanocellulose, the binding strength of the nanocellulose may be improved by adding the nanocellulose in the second esterification reaction step. In addition, the binding force of the nanocellulose may be further improved by adding the water-dispersed nanocellulose in the second esterification reaction step.

The nanocellulose may be added at a temperature of 100 °C to 160 °C, 110 °C to 140 °C, or 110 °C to 150 °C. When the range is satisfied, solvent resistance may be improved.

The nanocellulose may be added at a rate of 2 kg/min to 10 kg/min, 2.5 kg/min to 9.5 kg/min, or 3 kg/min to 8 kg/min. When the range is satisfied, without causing re-agglomeration of the nanocellulose, the efficiency of the manufacturing process may be improved.

In step, a titanium-based catalyst, a germanium-based catalyst, an antimony-based catalyst, an additive, and a stabilizer may be added before the esterification reaction. The esterification reaction may be performed at a temperature of 250 °C or less, 240 °C or less, 235 °C or less, 180 °C to 250 °C, 185 °C to 240 °C, or 180 °C to 240 °C for 0.5 hours to 5 hours, 0.5 hours to 4.5 hours, 0.5 hours to 3.5 hours, or 1 hours to 3 hours. The esterification reaction may be performed under normal pressure until the by-products water and methanol theoretically reach 90 %.

The prepolymer may have a number average molecular weight of 500 g/mol to 10,000 g/mol, 500 g/mol to 8,500 g/mol, 500 g/mol to 7,000 g/mol, 1,000 g/mol to 6,000 g/mol, or 2,500 g/mol to 5,500 g/mol. The number average molecular weight may be measured by gel permeation chromatography (GPC). When the range is satisfied, in the polycondensing reaction, the molecular weight of the prepolymer may be efficiently increased, thereby improving strength characteristics.

The manufacturing method may include a step of preparing a first biodegradable resin by polycondensing the prepolymer.

The polycondensing reaction may be performed at a temperature of 180 °C to 280 °C, 190 °C to 270 °C, 210 °C to 260 °C, or 230 °C to 255 °C. The polycondensing reaction may be performed under a pressure of 1.0 Torr or less, 0.9 Torr or less, 0.7 Torr or less, 0.2 Torr to 1.0 Torr, 0.3 Torr to 0.9 Torr, or 0.5 Torr to 0.9 Torr. The polycondensing reaction may be performed for 1 hour to 6 hours, 1.5 hours to 5.5 hours, 2 hours to 5 hours, or 3.5 hours to 4.5 hours.

The first biodegradable resin prepared in the step may have an intrinsic viscosity of 0.05 to 10 dL/gr. The first biodegradable resin may have a melt viscosity of 1,000 to 30,000 poise as measured under the condition of 100 s⁻¹ using a Rheometrics dynamic spectrometer (RDS). The first biodegradable resin may have a number average molecular weight (Mn) of 40,000 g/mol or more, 43,000 g/mol or more, 45,000 g/mol or more, or 40,000 g/mol to 70,000 g/mol. The first biodegradable resin may have a weight average molecular weight (Mw) of 60,000 g/mol or more, 65,000 g/mol or more, 75,000 g/mol or more, 80,000 g/mol or more, or 85,000 g/mol to 100,000 g/mol. The first biodegradable resin may have a polydispersity index (PDI) of 1.2 to 2.0, 1.5 to 1.9, or 1.6 to 1.8. When the number average molecular weight, weight average molecular weight, or polydispersity index of the first biodegradable resin satisfies the range, strength and processability may be further improved. The first biodegradable resin may have an acid value of 1.8 mgKOH/g or less, 1.5 mgKOH/g or less, 1.3 mgKOH/g or less, or 1.25 mgKOH/g or less. When the range is satisfied, solvent resistance may be improved.

The preparation method may include a step of preparing a biodegradable resin composition by mixing the first biodegradable resin with an inorganic filler.

The preparation method may include a step of mixing the first biodegradable resin, the inorganic filler, and a second biodegradable resin different from the first biodegradable resin to prepare a biodegradable resin composition.

The second biodegradable resin may be the same as the above-described second biodegradable resin.

The mixing may be set appropriately according to a molding method. For example, before feeding the first and second biodegradable resins and the inorganic filler into a molding machine through a hopper, the first and second biodegradable resins and inorganic filler may be melt-kneaded. Alternatively, melt-kneading and molding of the first and second biodegradable resins and inorganic filler may be performed simultaneously. It is desirable to perform kneading with high shear stress to uniformly distribute the inorganic filler in the first and second biodegradable resins. Specifically, the kneading is preferably performed using a kneader reactor, an extrusion molding machine equipped with a single screw, or a twin-screw kneader. When necessary, in step, one or more of the above-described plasticizer and additive may be additionally added.

The step may include a mixing step composed of one or more stages. One-stage mixing step may be a single mixing step of preparing a biodegradable resin composition including the inorganic filler in an amount of 60 to 80 wt%, 61 to 80 wt%, 62 to 80 wt%, 63 to 80 wt%, 64 to 80 wt%, 65 to 80 wt%, 60 to 75 wt%, 61 to 75 wt%, 62 to 75 wt%, 63 to 75 wt%, 64 to 75 wt%, 65 to 75 wt%, or 65 to 72 wt% based on a total weight of the biodegradable resin composition. Two-stage mixing step may include a first mixing step of preparing a biodegradable resin composition including the inorganic filler in an amount of 60 to 80 wt%, 61 to 80 wt%, 62 to 80 wt%, 63 to 80 wt%, 64 to 80 wt%, 65 to 80 wt%, 60 to 75 wt%, 61 to 75 wt%, 62 to 75 wt%, 63 to 75 wt%, 64 to 75 wt%, 65 to 75 wt%, or 65 to 72 wt% based on a total weight of the biodegradable resin composition and a second mixing step of preparing a biodegradable resin composition including the inorganic filler in an amount of 30 to 85 wt%, 30 to 80 wt%, 30 to 75 wt%, 30 to 70 wt%, 35 to 85 wt%, 35 to 80 wt%, 35 to 75 wt%, 35 to 70 wt%, 40 to 85 wt%, 40 to 80 wt%, 40 to 75 wt%, 40 to 70 wt%, 45 to 85 wt%, 45 to 80 wt%, 45 to 75 wt%, 45 to 70 wt%, 50 to 85 wt%, 50 to 80 wt%, 50 to 75 wt%, or 50 to 70 wt% based on a total weight of the biodegradable resin composition.

The mixing step composed of two or more stages may be a tandem continuous process. The mixing step may be performed at a temperature of 150 to 190 °C, 150 to 180 °C, or 160 to 180 °C. When the range is satisfied, an increase in torque during the mixing step may be reduced, and the thermal decomposition of the mixed biodegradable resin composition may be reduced.

The preparation method may include step (d) of preparing pellets of the biodegradable resin composition.

In the step, the biodegradable resin composition is fed into an extrusion molding machine equipped with a single screw or an extrusion molding machine equipped with a twin screw, extruded at a temperature of 150 °C to 180 °C, cut with a hot-cut pellet cutter, and cooled at a temperature of 30 °C or less, 25 °C or less, 5 to 50 °C, 10 to 30 °C, 15 to 25 °C, or 20 to 25 °C to obtain pellets. In the cutting step, pellet cutting machines used in the art may be used without particular limitations, and the shape of the manufactured pellets is not particularly limited.

The preparation method may include a step of injection-molding the biodegradable resin composition.

The biodegradable resin composition may be the pelletized biodegradable resin composition.

In the step, the pelletized biodegradable resin composition may be manufactured into an injection-molded article at an injection-molding barrel temperature of 150 °C to 250 °C, 160 °C to 250 °C, 160 °C to 240 °C, or 160 °C to 230 °C using an injection-molding machine.

The injection molding may be conducted by an injection-molding method such as injection compression molding, injection press molding, gas-assisted injection molding, foam molding, insert molding, in-mold coating molding, insulating mold molding, rapid heating and cooling mold molding, two-color molding, sandwich molding and ultra-high-speed injection molding.

Hereinafter, the present invention will be described in more detail based on examples and comparative examples. However, the examples and comparative examples are presented to explain the present invention in more detail, and the present invention is not limited by the examples and comparative examples.

### Preparation examples

### Nanocellulose preparation example

Dry powder-type cellulose nanocrystals (NVC-100, manufacturer: Celluforce) having a particle size of about 1 *µm* to about 50 *µm* were dispersed in water at 1 wt%, and then ultrasonicated at an output of 20,000 J/s for 2 minutes using a tip-type ultrasonic disperser to prepare nanocellulose.

### Preparation Example 1

### - First step: Prepolymer obtainment

1,4-butanediol (1,4-BDO) and terephthalic acid (TPA) were fed into a 5 kg esterification reactor equipped with a nitrogen inlet and a stirrer to prepare a slurry. Here, a molar ratio of 1,4-butanediol (1,4-BDO) to terephthalic acid (TPA) was 1.4:1, and the D₅₀ of the terephthalic acid (TPA) was 130 µm.

The slurry was fed into a reactor through a feed line, and 250 ppm of tetrabutyl titanate (Dupont, manufactured by Tyzor TnBT), a titanium-based catalyst, was fed thereinto. Next, the slurry was heated up to 210 °C, and an esterification reaction was performed until about 90 % or more of water, a by-product, was discharged to prepare the first prepolymer.

53 mol% of 1,4-butanediol (1,4-BDO) was added to the first esterification reaction product based on the total mole number of the diol component, 53 mol% of adipic acid (AA) based on the total mole number of the dicarboxylic acid component was added thereto, and, 200 ppm of tetrabutyl titanate (Dupont, manufactured by Tyzor TnBT), a titanium-based catalyst, based on the total weight of the diol component and the dicarboxylic acid component was fed thereinto. In addition, 100 ppm of the nanocellulose according to the preparation example was added to the first esterification reaction product. Next, the second esterification reaction was performed for about 2 hours and 30 minutes at 220°C and atmospheric pressure until 95 % of water, a by-product, was discharged, thereby preparing the second prepolymer having a number average molecular weight of 5,500 g/mol.

### - Second step: Polycondensation reaction

The second prepolymer was transferred to a 5 kg-sized polycondensation reactor. 150 ppm of tetrabutyl titanate (Dupont, manufactured by Tyzor TnBT), a titanium-based catalyst, and 500 ppm of a triethylene phosphate stabilizer were added based on the total weight of the second prepolymer, and then stabilized for about 10 minutes.

Next, a polycondensation reaction was performed at 0.5 torrs for 2 hours after heating to 240 °C to produce a PBAT resin having a number average molecular weight of about 42,000 g/mol and a glass transition temperature (Tg) of -30 °C.

### Preparation Example 2

A PBAT resin having a number average molecular weight of about 25,000 g/mol and a glass transition temperature (Tg) of -35 °C was prepared in the same manner as in Preparation Example 1 except that 120 ppm of nanocellulose, instead of 100 ppm of nanocellulose in Preparation Example 1, was added, and a polycondensation reaction was performed for 1 hour and 30 minutes instead of the polycondensation reaction performed for 2 hours in Preparation Example 1.

### Examples

- First biodegradable resin #1: Preparation Example 1
- First biodegradable resin #2: Preparation Example 2
- First biodegradable resin #3: KINGFA Company PBAT, Tg -30 °C
- Second biodegradable resin: Polylactic acid(content of poly D-lactic acid: about 1 %, Tg 60 °C)
- Calcium carbonate #1: Omya Company
- Calcium carbonate #2: Heavy calcium carbonate surface-treated with stearic acid (average particle diameter (D₅₀) about 3 µm)
- Chain extender: BASF Company Joncryl
- Lubricant #1: Calcium stearate
- Lubricant #2: Stearyl stearate
- Antioxidant #1: Phenolic antioxidant, ADEKA KOREA Company AO-60
- Antioxidant #2: Phosphorus antioxidant, ADEKA KOREA Company 2112

### Example 1

In a kneader reactor, the first biodegradable resin #1:the calcium carbonate #1:the chain extender:the antioxidant #1: antioxidant #2 were mixed in a weight ratio of 52:47:0.2:0.4:0.4 to prepare a biodegradable resin composition.

### Examples 2 to 8 and Comparative Examples 1 to 2

Biodegradable resin compositions were prepared according to the compositions shown in Table 1 below.

**[Table 1]**

| Classi ficatio n | First biode grada ble resin #1 | First biode grada ble resin #2 | First biode grada ble resin #3 | Secon d biode grada ble resin | Calc ium carb onat e #1 | Calc ium carb onat e #2 | Cha in ext end er | Lub rica nt #1 | Lub rica nt #2 | Anti oxida nt #1 | Anti oxida nt #2 |
|---|---|---|---|---|---|---|---|---|---|---|---|
| Unit | wt% | | | | | | | | | | |
| Exam ple 1 | 52 | - | - | - | 47 | - | 0.2 | - | - | 0.4 | 0.4 |
| Exam ple 2 | 32 | - | - | 20 | 47 | - | - | - | - | 0.5 | 0.5 |
| Exam ple 3 | 20 | - | - | 32 | 47 | - | - | - | - | 0.5 | 0.5 |
| Exam ple 4 | 32 | - | - | 20 | - | 47 | - | 0.4 | 0.4 | 0.1 | 0.1 |
| Exam ple 5 | 20 | - | - | 32 | - | 47 | - | 0.4 | 0.4 | 0.1 | 0.1 |
| Exam ple 6 | - | - | 9 | 50 | - | 40 | - | 0.4 | 0.4 | 0.1 | 0.1 |
| Exam ple 7 | - | - | 19 | 50 | - | 30 | - | 0.4 | 0.4 | 0.1 | 0.1 |
| Exam ple 8 | - | - | 39 | 35 | - | 25 | - | 0.4 | 0.4 | 0.1 | 0.1 |
| Comp arativ e Exam ple 1 | - | 100 | - | - | - | - | - | - | - | - | - |
| Comp arativ e Exam ple 2 | - | - | - | 100 | - | - | - | - | - | - | - |

### Experimental examples

### < Manufacture of biodegradable resin pellets >

The biodegradable resin composition of each of Examples 1 to 8 and Comparative Examples 1 to 2 was kneaded at about 170°C using a twin screw extrusion facility, and then cut and cooled, thereby producing a pelletized biodegradable resin composition.

### < Manufacture of biodegradable resin specimens >

The biodegradable resin pellet of each of Examples 1 to 8 and Comparative Examples 1 to 2 was placed in a pair of molds having a size of 60 mm in a transverse direction × 60 mm in a longitudinal direction. Next, a biodegradable resin specimen having an average thickness of 2 mm was manufactured under conditions of a temperature of 180 °C and a pressure of 20 Mpa.

### < Manufacture of biodegradable resin specimen samples >

The biodegradable resin specimen was cut into 20 mm in a transverse direction × 4 mm in a longitudinal direction × 0.7 mm in a thickness to produce a biodegradable resin specimen sample.

### Experimental Example 1 - Mold shrinkage ratio

When the biodegradable resin composition of each of Examples 1 to 8 and Comparative Examples 1 to 2 was manufactured into a biodegradable molded article by an injection-molding process, a volume change was evaluated. For shrinkage stability evaluation, the biodegradable resin specimen was removed from a mold, and the shrinkage ratio of the biodegradable resin specimen after 24 hours was calculated. Specifically, for the biodegradable resin specimen manufactured in each of Examples 1 to 8 and Comparative Examples 1 to 2, a shrinkage ratio in the transverse direction, a shrinkage ratio in the longitudinal direction, and a mold shrinkage ratio were measured according to Equations 1 to 3 below. Results are shown in Table 2 below. Mold shrinkage ratio (%) of biodegradable resin specimen = (Shrinkage ratio in transverse direction + Shrinkage ratio in longitudinal direction)/2

In Equation 1, the shrinkage ratio in the transverse direction is calculated by Equation 2 below, the shrinkage ratio in the longitudinal direction is calculated by Equation 3 below: Shrinkage ratio in transverse direction (%) = (Transverse direction length (mm) of biodegradable resin specimen after 24 hours/60 mm) × 100 Shrinkage ratio (%) in longitudinal direction = (Longitudinal length (mm) of biodegradable resin specimen after 24 hours/60 mm) × 100

### Experimental Example 2 - Coefficient of thermal expansion

When the biodegradable resin composition of each of Examples 1 to 8 and Comparative Examples 1 to 2 was manufactured into a biodegradable molded article by an injection-molding process, the dimensional stability at room temperature and the dimensional stability at high temperature were evaluated.

For the dimensional stability evaluation, the biodegradable resin specimen sample of each of Examples 1 to 8 and Comparative Examples 1 to 2 was subjected to the measurement of the first thermal expansion coefficient in a range of 10 °C to 40 °C and the measurement of the second thermal expansion coefficient in a range of 80 °C to 100 °C. Results are shown in Table 2 below.
- Analysis equipment: TMA (Thermomechanical Analysis), TA Company Q400
- Test method: ASTM E831
- Measurement mode: Tension mode
- Heating rate: 5 °C/min
- Load: 0.05 N
- Atmosphere: N₂, Flow rate (50 mL/min)
- Measurement temperature range: 0 °C to 100 °C

### Experimental Example 3 -Specific gravity

For the biodegradable resin pellet of each of Examples 1 to 8 and Comparative Examples 1 to 2, the specific gravity was measured at 23 °C according to ASTM D792. Results are shown in Table 2 below.

### Experimental Example 4 - Tensile strength and elongation at break

For the biodegradable resin composition of each of Examples 1 to 8 and Comparative Examples 1 to 2, the tensile strength and the elongation at break were measured according to ASTM D638. Results are shown in Table 2 below.

### Experimental Example 5 - Flexural strength and flexural modulus

For the biodegradable resin composition of each of Examples 1 to 8 and Comparative Examples 1 to 2, the flexural strength and the flexural modulus were measured according to ASTM D790. Results are shown in Table 2 below.

### Experimental Example 6 - Impact strength

For the biodegradable resin composition of each of Examples 1 to 8 and Comparative Examples 1 to 2, the tensile strength and the breaking elongation were measured according to ASTM D256. Results are shown in Table 2 below.

### Experimental Example 7 - Biodegradability

An inoculum container only containing compost manufactured according to the ISO 14855 standard was prepared, and the biodegradable resin specimen sample of each of Examples 1 to 8 and Comparative Examples 1 to 2 was added onto the compost in a weight ratio of 6:1 (the weight of the compost being dried: the biodegradable resin specimen sample). Next, the compost was cultured for 180 days under conditions of a temperature of 60°C, a humidity of 90%, and an oxygen concentration of 6% or more, and carbon dioxide generated from each test container was captured and then titrated with phenolphthalein aqueous solution to measure the amount of carbon dioxide generated. Biodegradability was calculated according to Equation 4 below, and results are shown in Table 2. Biodegradability (%) = [(Carbon dioxide generation amount in test container) - (Carbon dioxide generation amount in inoculum container)]/(Theoretical carbon dioxide generation amount in test container) × 100

**[Table 2]**

| | Unit | Exa mpl e 1 | Exa mpl e 2 | Exa mpl e 3 | Exa mpl e 4 | Exa mpl e 5 | Exa mpl e 6 | Exa mpl e 7 | Exa mpl e 8 | Comp arative Exam ple 1 | Comp arative Exam ple 2 |
|---|---|---|---|---|---|---|---|---|---|---|---|
| Shrinkag e ratio in the transvers e direction | % | 0.2 | 0.2 | 0.3 | 0.2 | 0.3 | 0.4 | 0.4 | 0.5 | 1.1 | 0.7 |
| Shrinkag e ratio in the longitudi nal direction | | 0.2 | 0.3 | 0.3 | 0.2 | 0.3 | 0.4 | 0.5 | 0.5 | 1.2 | 0.7 |
| Mold shrinkag e ratio | | 0.2 | 0.25 | 0.3 | 0.2 | 0.3 | 0.4 | 0.45 | 0.5 | 1.15 | 0.7 |
| First thermal expansio n coefficie nt | *µ*m/( m·°C ) | 214 | 142 | 108 | 135 | 105 | 72 | 98 | 156 | 297 | 72.5 |
| Second thermal expansio n coefficie nt | | 630 | 569 | 871 | 542 | 830 | 912 | 925 | 952 | 1,060 | 13,952 |
| Specific gravity | - | 1.59 | 1.63 | 1.63 | 1.63 | 1.63 | 1.57 | 1.48 | 1.49 | 1.23 | 1.24 |
| Tensile strength | MPa | 11 | 17.6 | 22.8 | 18.1 | 23.4 | 32.7 | 34.1 | 23.3 | 22 | 72 |
| Elongati on at break | % | 450 | 6 | 4.1 | 12 | 6.5 | 16.2 | 21.3 | 25.4 | 658 | 3 |
| Flexural strength | MPa | 10.3 | 23 | 34.9 | 24 | 35.3 | 49.6 | 42.1 | 31.0 | 7.7 | 124 |
| Flexural modulus | | 310 | 860 | 1,45 0 | 875 | 1,52 0 | 3,04 0 | 1,92 0 | 1,02 0 | 127 | 3,402 |
| Impact strength | kJ/m ² | 45 | 7.1 | 6.7 | 9.2 | 8.8 | 12.2 | 14.0 | 11.0 | N.B¹⁾ | 29 |
| Biodegr adability | % | 90 | 90 | 90 | 90 | 90 | 90 | 90 | 90 | 90 | 80 |
| 1) N.B: No Break (not broken) | | | | | | | | | | | |

As shown in Tables 1 and 2, it was confirmed that Examples 1 to 8 including the biodegradable resin including a diol, aromatic dicarboxylic acid and aliphatic dicarboxylic acid, and the inorganic filler and having a mold shrinkage ratio of 1.0 % or less exhibited excellent shrinkage ratio and excellent dimensional stability at room temperature and high temperature, compared to Comparative Examples 1 to 2. In addition, it was confirmed that Examples 1 to 8 had a higher specific gravity than Comparative Examples 1 to 2, so that they can be appropriately applied to products requiring a preservation function, durability, etc. and have excellent flexural strength and flexural modulus. Further, it was confirmed that Examples 1 to 8 had excellent breaking elongation and impact strength compared to Comparative Example 2, thereby having reduced brittleness and improved processability.

## Claims

1. A biodegradable resin composition, comprising:
a first biodegradable resin having a glass transition temperature (Tg) of -15 °C or lower; and
an inorganic filler,
wherein a mold shrinkage ratio of the biodegradable resin specimen measured according to Measurement Method 1 below is 1.0 % or less:
[Measurement Method 1]
1) The biodegradable resin composition is placed between a pair of molds having a size of 60 mm in a transverse direction × 60 mm in a longitudinal direction, and then a biodegradable resin specimen having an average thickness of 2 mm is manufactured at 180 °C under a pressure of 20 Mpa.
2) The biodegradable resin specimen is removed from the molds, and after 24 hours, a shrinkage ratio in a transverse direction of the biodegradable resin specimen and a shrinkage ratio in a longitudinal direction thereof are calculated.
3) A mold shrinkage ratio of the biodegradable resin specimen is calculated according to Equation 1 below: Mold shrinkage ratio (%) of biodegradable resin specimen = (Shrinkage ratio in transverse direction + Shrinkage ratio in longitudinal direction)/2
where the shrinkage ratio in the transverse direction is calculated by Equation 2 below, the shrinkage ratio in the longitudinal direction is calculated by Equation 3 below: Shrinkage ratio (%) in transverse direction = (Transverse length (mm) of biodegradable resin specimen after 24 hours/60 mm) × 100 Shrinkage ratio (%) in longitudinal direction = (Longitudinal length (mm) of biodegradable resin specimen after 24 hours/60 mm) × 100.

2. The biodegradable resin composition according to claim 1, wherein the biodegradable resin specimen has a mold shrinkage ratio of 0.5 % or less.

3. The biodegradable resin composition according to claim 1, wherein a content of the inorganic filler is 10 wt% to 90 wt% based on a total weight of the biodegradable resin composition.

4. The biodegradable resin composition according to claim 1, wherein the biodegradable resin composition comprises the first biodegradable resin and the inorganic filler in a weight ratio of 90:10 to 30:70.

5. The biodegradable resin composition according to claim 1, wherein the biodegradable resin composition comprises a second biodegradable resin different from the first biodegradable resin, and the second biodegradable resin has a glass transition temperature (Tg) of 50 °C or higher.

6. The biodegradable resin composition according to claim 5, wherein a flexural strength of the second biodegradable resin according to ASTM D790 is 50 MPa or more.

7. The biodegradable resin composition according to claim 5, wherein a flexural modulus of the second biodegradable resin according to ASTM D790 is 2,500 MPa or more.

8. The biodegradable resin composition according to claim 5, wherein the biodegradable resin composition comprises the first biodegradable resin and the second biodegradable resin in a weight ratio of 90:10 to 10:90.

9. The biodegradable resin composition according to claim 1, wherein a first thermal expansion coefficient of a biodegradable resin specimen sample measured according to Measurement Method 2 below is 75 pm/(m. °C) to 290 pm/(m. °C):
[Measurement Method 2]
1) The biodegradable resin specimen is cut into a size of 20 mm in a transverse direction × 4 mm in a longitudinal direction × 0.7 mm in a thickness to manufacture a biodegradable resin specimen sample.
2) A first thermal expansion coefficient of the biodegradable resin specimen sample is measured in a range of 10 °C to 40 °C while heating from 0 °C to 100 °C at a rate of 5 °C/min using a thermomechanical analyzer.

10. The biodegradable resin composition according to claim 9, wherein a second thermal expansion coefficient in a range of 80 °C to 100 °C of the biodegradable resin specimen sample measured according to Measurement Method 2 described above is 100 *µ*m/(m.°C) to 1,000 *µ*m/(m·°C).

11. The biodegradable resin composition according to claim 1, wherein a specific gravity of a biodegradable resin pellet measured according to Measurement Method 3 below is 1.30 to 2.00:
[Measurement Method 3]
1) The biodegradable resin composition is extruded at 175 °C, and then cooled at 5 °C, thereby manufacturing a biodegradable resin pellet.
2) A specific gravity of the biodegradable resin pellet is measured at 23 °C according to ASTM D792.

12. A biodegradable molded article, comprising:
a first biodegradable resin having a glass transition temperature (Tg) of -15 °C or lower; and
an inorganic filler,
wherein a mold shrinkage ratio of a biodegradable resin specimen measured according to Measurement Method 1 below is 1.0 % or less:
[Measurement Method 1]
1) The biodegradable resin composition is placed between a pair of molds having a size of 60 mm in a transverse direction × 60 mm in a transverse direction, and then a biodegradable resin specimen having an average thickness of 2 mm is manufactured at 180 °C under a pressure of 20 Mpa.
2) The biodegradable resin specimen is removed from the molds, and after 24 hours, a shrinkage ratio in the transverse direction of the biodegradable resin specimen and a shrinkage ratio in the longitudinal direction thereof are calculated.
3) The mold shrinkage ratio of the biodegradable resin specimen is calculated according to Equation 1 below: Mold shrinkage ratio (%) of biodegradable resin specimen = (Shrinkage ratio in transverse direction + Shrinkage ratio in longitudinal direction)/2
In Equation 1, the shrinkage ratio in the transverse direction is calculated by Equation 2 below, the shrinkage ratio in the longitudinal direction is calculated by Equation 3 below: Shrinkage ratio (%) in transverse direction = (Transverse length (mm) of biodegradable resin specimen after 24 hours/60 mm) × 100 Shrinkage ratio (%) in longitudinal direction = (Longitudinal length (mm) of biodegradable resin specimen after 24 hours/60 mm) × 100.

13. The biodegradable molded article according to claim 12, wherein the biodegradable molded article is a nonwoven fabric, a vacuum-formed sheet, a blown-molded article, or an injection-molded article.
